# EUROPEAN PATENT APPLICATION

(11) **EP 2 562 517 A1**
(43) Date of publication of application: **27.02.2013**
(21) Application number: 11178266.0
(22) Date of filing: 22.08.2011
(51) Int. Cl.: G01F 1/66

(54) **Ultrasonic flow meter with transducers adhered to flow channel**

(71) Applicant: Kamstrup A/S, 8660 Skanderborg (DK)
(72) Inventor: Laursen, Peter Schmidt, 8660 Skanderborg (DK); Sørensen, Jens Lykke, 8330 Beder (DK); Nielsen, Søren Tønnes, 8355 Solbjerg (DK)
(74) Representative: Plougmann & Vingtoft A/S

(57) **Abstract**

The invention discloses an ultrasonic flow meter 1 arranged to measure a flow rate of a fluid. The piezoelectric transducers are adhered to the outer surface of the flow channel 3, and the control circuit 5 is electrically connected to the transducers by flexible connectors 6 being connected to at least one of the transducer and the control circuit by means of a contact pressure arising from the mount of the control circuit onto the flow channel.

## Description

### FIELD OF THE INVENTION

The present invention relates to an ultrasonic flow meter.

### BACKGROUND OF THE INVENTION

In an ultrasonic flow meter, ultrasonic transducers are mounted to a flow channel in a way so that ultrasonic signals can be introduced into the flow channel and travel along a measuring section to be detected after the passage. The operation of the ultrasonic transducers is controlled by an electronic circuit, electrically connected to the transducers.

In many flow meters, the transducer is a piezoelectric element mounted as a sub-assembly in a separate unit, a so-called transducer unit, where the piezoelectric element is mounted together with holder elements, contact elements, connection wires etc., to provide a complete unit which can be connected to the electronic circuit by connection wires. A transducer unit in the form of a separate sub-assembly is made of a number of parts which requires separate mount, and mounting of the separate transducer unit in the flow meter requires handling of the connection wires.

An alternative way of connecting the ultrasonic transducers and the control circuit is disclosed in WO 2010/112030. In this disclosure, the ultrasonic transducers are mechanically fixed directly on the circuit board by use of electrical conducting fixing means, and the circuit board is mounted on the flow channel in a way so that the transducers can emit ultrasonic signals into the flow passage. A sub-assembly suitable for automatic production is thereby obtained. However due to the proximity between the transducers and sensitive electronic components, use of production steps which requires elevated temperatures risk damaging the electronic components, either directly from the heat, or indirectly from a pyro-electric discharge of the transducer after the transducer has been heated. High temperature production steps may sometimes be run at a lower temperature, however, a temperature sensitive process normally requires substantially longer time when run at a low temperature, than when run at a high temperature.

### SUMMARY OF THE INVENTION

It would be advantageous to achieve a flow meter suitable for effective automatic production, where piezoelectric transducers can be handled in a simple manner without risk of damaging sensitive electronic components of the flow meter or the transducers themselves. In general it is an object of the present invention to provide an alternative to known flow meters, which facilitate highly automated production.

In accordance with a first aspect of the invention, there is provided an ultrasonic flow meter which comprises:
- a through-going flow channel defining a passage of the fluid, the flow channel comprises a mount section for mounting flow meter components;
- two or more piezoelectric transducers arranged in the mount section;
- control circuit arranged for operating the two or more piezoelectric transducers and to generate a signal or value indicative of the flow rate of the fluid;
characterized in that each transducer is adhered to the outer surface of the flow channel in the mount section, and wherein the control circuit is electrically connected to the piezoelectric transducers by a flexible connector being connected to at least one of the transducer and the control circuit by means of a contact pressure arising from the mount of the control circuit onto the flow channel.

By adhering the transducers to the flow channel prior to mounting the control circuit on the flow channel, a flow meter is provided where the flow channel and the transducers form a sub-assembly separate from the control circuit, so that each sub-assembly may be fabricated without affecting the other, in particular each sub-assembly may be subdued to relevant temperature conditions without affecting the other sub-assembly. Moreover, adhesion of the transducers directly to the flow channel may be done in an automated manner, and by connecting the transducers and the control circuit by virtue of the contact pressure arising from the mount of the control circuit onto the flow channel, the entire or at least substantial parts of the flow meter can be fabricated in a highly automated manner.

In a second aspect, the invention relates to a method of fabricating an ultrasonic flow meter, the method comprises:
- providing a through-going flow channel defining a passage of the fluid, the flow channel comprises a mount section for mounting flow meter components;
- mounting two or more piezoelectric transducers in the mount section;
- mounting a control circuit arranged for operating the two or more piezoelectric transducers and to generate a signal or value indicative of the flow rate of the fluid;
characterized in that each of the two or more transducer are mounted by adhering the transducers to the outer surface of the flow channel in the mount section, and wherein prior to mounting the control circuit, connect flexible connectors to at least one of the transducer and the control circuit, so that upon mounting of the control circuit onto the flow channel, the control circuit is electrically connected to the piezoelectric transducers by the flexible connector by means of a contact pressure arising from the mount of the control circuit onto the flow channel.

In embodiments, the ultrasonic flow meter may be or may be part of a charging consumption meter, e.g. a water meter, gas meter, heat meter, cooling meter, or energy meter, where the consumption meter is arranged for measuring consumption data of a supplied utility used as a basis for billing. The consumption meter may be used in connection with district heating or district cooling. The consumption meter may be a legal meter, i.e. a meter which is subdued to regulatory demands. Such regulatory demands may be demands to the precision of the measurements.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates an embodiment of flow meter elements with a mount section formed monolithically with the flow channel;
Fig. 2 illustrates an embodiment of flow meter elements with a mount section is part of a cup containing flow meter component, the cup being fluid tightly connected to the flow channel;
Fig. 3 illustrates the flow meter elements of Fig. 1, with further elements, in an assembled state;
Fig. 4 schematically illustrates the piezoelectric transducer adhered onto the flow channel wall in the coupling areas;
Figs. 5A to 5C illustrate embodiments of electrical connections between the control circuit and the transducer glued to the flow channel surface;
Fig. 6 and Fig. 7 illustrate embodiments where the transducer is provided with a wrap around electrodes of two different types; and
Fig. 8 illustrates an embodiment where the transducers are contacted through a hole in the control circuit PCB.

### DESCRIPTION OF EMBODIMENTS

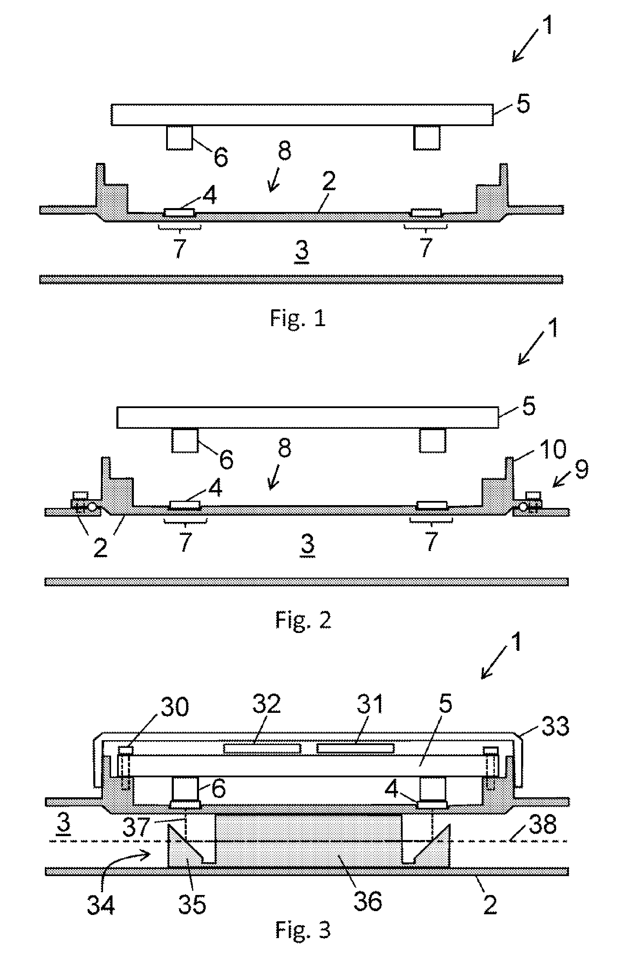

Figs. 1 to 3 illustrate elements of a flow meter 1 in accordance with embodiments of the present invention. Figs. 1 and 2 illustrate in a pre-assembled state, the flow channel 3 with flow channel wall 2, piezoelectric transducers 4, control circuit 5, and flexible connectors 6. Fig. 1 illustrates an embodiment where the mount section 8 is formed monolithically with the flow channel, i.e. the mount section is part of a closed flow channel. Fig. 2 illustrates an embodiment where the mount section 8 is part of a cup or housing containing flow meter component, and fluid tightly connected to the flow channel by suitable means, here in the form of an O-ring and screws 9. In this embodiment, the bottom of the cup forms the mount section. Fig. 3 illustrates the flow meter elements of Fig. 1, with further elements, in an assembled state.

The ultrasonic flow meter is a transit time flow meter arranged to measure a flow rate of a fluid flowing in the flow channel 3 by use of the known operation principle for transit time flow meters, where ultrasonic signals are emitted at one transducer and received at the other transducer, and where the difference in time-of-arrival between oppositely propagating signals is measured and converted into a flow rate. The piezoelectric transducers are operated by the control circuit 5, which based on the involved signals generate a signal or value indicative of the flow rate of the fluid. The level of signal treatment of the control circuit may vary from basic signal treatment, where processed signals are output to a further electronic unit for further signal processing, to a complete signal treatment resulting in the determination of the flow rate. Such further electronic unit may be part of the flow meter unit 1, or may be part of o separate calculator circuit (not shown) communicatively connected to the flow meter.

The meter comprises the flow channel 3 defined by a channel wall 2 where a section of this wall is referred to as the mount section, since this section is used as a support for mounting flow meter components. In the illustrated embodiments, the ultrasonic signals are coupled in and out of the flow channel through the wall. At least in these areas is the wall thickness adapted for ensuring a high transmission efficiency of the ultrasonic signal, the specific areas of the channel wall supporting the transducers may be referred to as coupling areas 7.

As is shown in Fig. 1 each transducer is adhered to the outer surface of a coupling area, i.e. adhered to the outside of the flow channel wall 2. In this way the flow channel and the two or more transducers form a sub-assembly that may be assembled separated from the electronic components of the control electronics 5. The electrical connection between the transducers and the control circuit is obtained from flexible connectors 6, here in the form of flexible conducting blocks, e.g. conducting polymer blocks. When the control circuit is mounted on the flow channel, the flexible connected is bias into contact with the transducer, and thereby establishing electrical contact between the transducers and the control circuit.

Fig. 2 is similar to Fig. 1, except that the transducers and the electronic components are mounted in a separate housing or cup 10. The transducers are adhered to the outer surface in the bottom of the cup, which when attached to the flow channel form part of the flow channel wall 2 to define the through-going flow passage 3. In this way the cup and the two or more transducers form a sub-assembly that may be assembled separated from the electronic components of the control electronics 5, which is mounted therein afterwards.

In Figs. 1 and 2, the conducting blocks 6 are fixed to the control circuit 5 during the general mounting of the electronic components, and then at the final assemblage the control circuit is placed on the mount section and fixed thereto. In Fig. 3 this is illustrated by pressing the control circuit against a shoulder of the housing and permanently mount it by means of fixing means 30, e.g. in the form of screws, rivets or other suitable means. The flexible conductors are thereby permanently compressed, and proper electric contact between the transducers and the control circuit is obtained.

Fig. 3 further illustrates a display 31 for displaying information relating to the consumed amount of fluid, a radio unit 32 for wireless remote reading of the meter, and a cover 33 for encapsulating the flow electronics to form an assemble flow meter. Moreover, the figure illustrates a measuring insert 34, with two reflectors 35 and a measuring tube 36 as is known in the art. Signals 37 emitted at one transducer is coupled through the wall to be reflected 90° at the first reflector surface, to travels parallel with the centre axis 38 through the measuring tube 35 until the second reflector, where it is reflected 90° to be directed towards the receiving other transducer.

In the illustrated embodiments, the coupling areas define supporting surfaces for the transducers. The supporting surfaces being parallel with a centre-plane of the flow channel, as defined by the centre axis 38. The coupling area is illustrated as two separate areas for supporting two transducers. In general the coupling area may be shaped in any suitable manner for supporting two or more transducers. It may be advantageous to use separate depressed areas to assist in obtaining proper positioning of the transducers. However, a single coupling area for supporting the transducer is possible, four separate coupling areas for supporting four transducers is possible, etc. The transducers are placed in the same plane in manner so that the centre axis 38 of the flow channel, the plane of the mounting area 7, the transducers, and the plane of the PCB of the control circuit all are parallel.

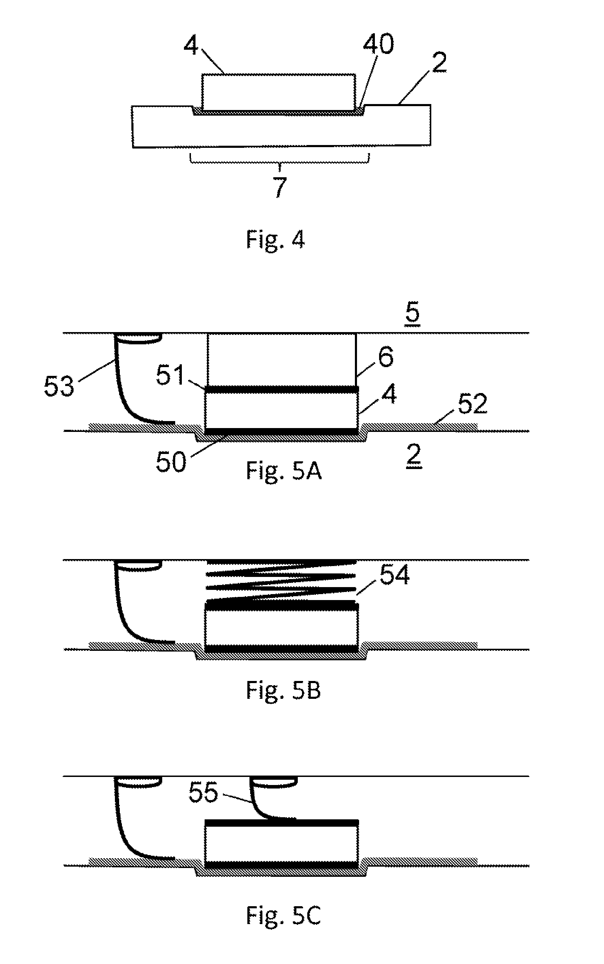

Fig. 4 is a schematic illustration of the piezoelectric transducer 4 adhered onto the flow channel wall 2 in the coupling areas 7. The piezoelectric transducer may be a monolithic piezoelectric transducer of a ceramic material, such as lead zirconate titanate (PZT) based transducers. The transducer is adhered to a polymer surface, i.e. the flow channel wall, as illustrated in by adhesive layer 40 which is positioned between the outer surface of the channel wall and the sound emitting surface of the piezoelectric transducer. The adhesive layer serves as a sound coupling layer to ensure high transmission efficiency from the transducer through the wall and into the fluid channel, as well as a means for ensuring that the transducers remain fixed during assemblage as well as during use where the transducers risk getting loose due to different thermal expansion coefficients of the ceramic material of the transducer and the polymeric material of the channel wall.

The thickness of the adhesive layer should preferably be below 1/10 of the sound wavelength in the adhesive material, such as below 0.3 mm for a 1 MHz signal. The housing may be made of different polymers, such as PPS, PES, PPE, a PS compound, or PA12, as well as composite materials based on a polymer and another type of material, e.g. carbon, glass or the like, to adjust the properties of the polymer.

In Fig. 4, the wall thickness in the coupling area is illustrated to be reduced with respect to the general wall thickness. In general, when the ultrasonic signal is introduced into the flow channel through a polymer wall, the wall thickness, at least in the coupling area, should be adapted in accordance with the so-called matching layer principle where the thickness of the wall is adjusted to a proper thickness to ensure proper transmission of the emitted ultrasonic wave of the ultrasonic transducer through the wall and into the flow channel, possibly under the constraint that the area should have thickness which ensures a sufficient strength. The thickness of the wall may be matched the acoustic wavelength of the emitted ultrasonic wave of the transducer. Depending upon the specific wall thickness of the flow channel 2, the wall thickness of the coupling area may be smaller, equal to or larger than the general wall thickness.

Fig. 4 discloses a polymeric wall, however in general may the flow meter, or parts of the flow meter be made in other materials, such as metals and ceramics. In particular, the bottom of the cup of Fig. 2 may be made of a metal sheet which forms the barrier between the fluid and the electronic components. For example, a closed unit as disclosed in WO 2010/112029 could be fabricated in accordance with embodiments of the present invention, and be fluid-tightly mounted onto the flow channel.

Flow meters are typically designed to operate for many years without maintenance, such as up to 16 years or more. To ensure that the transducers remain fixed for such a long period of time it may be advantageous to use a glue which requires curing at elevated temperatures, or which requires temperature treatment to increase adhesion between the two surfaces. Embodiments of the present invention allows for use of glues which needs curing at elevated temperatures or temperature treatment for other purposes without risk of damaging the electronics, such as at temperatures above 100°C, above 150°C, or even above 200°C, for an extended period of time, such as between 1 hour and 48 hours depending on the specific adhesive or glue. Suitable glues include, but are not limited to, liquid adhesives in the form of natural or synthetic glues, such as monomer or polymer-based glues, such as vinyl-based glues, epoxies, including epoxy mixtures, such as epoxy mixed with rubber powder. The glue may be mixed with a conductive material to render it conductive.

Figs. 5A to 5C illustrate embodiments of electrical connections between the control circuit 5 and the transducer 4 glued to the flow channel surface.

In the figures, the transducer 4 is provided with a front electrode 50 and a back electrode 51 obtained from metalizing the two faces of the piezoelectric disc. Contact to the front electrode is provided by use of a conductive glue 52 which is broadened out so that it is reachable by a leaf spring 53 attached to the control circuit 5 and pressed into the conductive glue, and maintained in contact, from the mount of the control circuit 5. The conductive layer is illustrated to be disposed symmetrically around the coupling area and the transducer 4. In an embodiment, as in Fig. 1 with two transducers, the conductive glue layer may be spread out to form a shared layer which collectively contacts the front electrode of both transducers; and similarly for embodiments with more than two transducers.

The figures 5A to 5C illustrate three embodiments of obtaining contact to the back electrode by means of a flexible connector. Fig. 5A illustrates an embodiment where the flexible connector is in the form of a conductive polymer block 6. Fig. 5B illustrates an embodiment where the flexible connector is in the form of a metal helical spring 54, and Fig. 5C illustrates an embodiment where the flexible connector is in the form of a metal leaf spring 55.

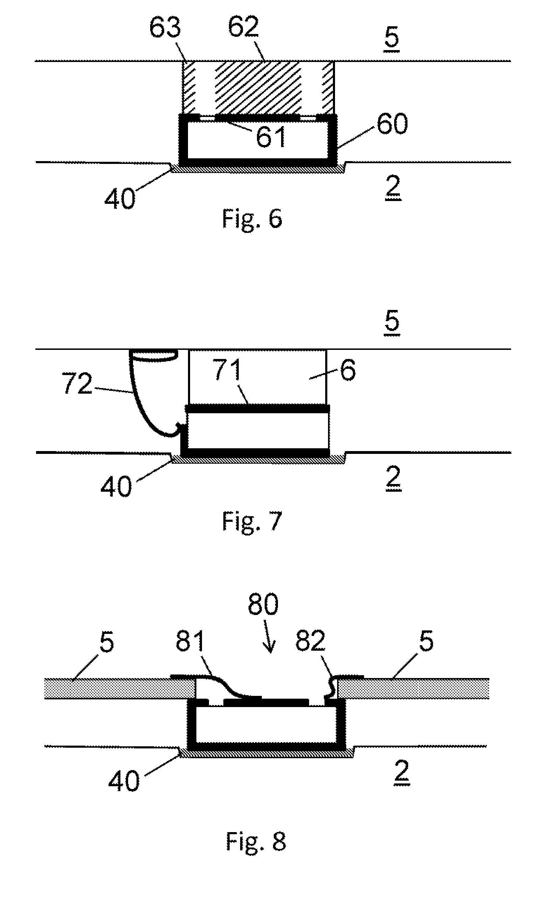

Fig. 6 illustrates a further embodiment of the present invention. In this figure the transducer is provided with a so-called wrap around electrode where the front electrode 60 is wrapped around the edge of the piezoelectric disc, and extended to cover the edge of the backside of the piezoelectric disc. The back electrode 61 covers the central part of the back side. The electrical connector is made of a conducting polymer block with a central conductive part to make electrical contact to the back electrode and a conductive edge part to make electrical contact to the front electrode.

Fig. 7 illustrates yet another embodiment of the present invention. In this figure the transducer is provided with a front electrode 71 which extends up the edge, or part of the edge, to be contacted by a spring 72, whereas the back electrode 71 covers the backside, here contacted with the conductive polymer block 6.

Fig. 8 illustrates yet another embodiment of the present invention. In this figure, the control circuit, i.e. the print material is provided with a hole 80. Connectors 81, 82 are attached on the upper side, i.e. the side pointing away from the flow channel, and contacted through the hole.

Preferably, the connector(s) is attached to the control circuit prior to assembly, as illustrated in the figures, since this is compatible with SMD mounting, so that the connectors may be attached in the SMD mounting process of the control circuit components. In general, however, the connectors may also be attached to backside of the piezoelectric transducers prior to the assembly.

Although the present invention has been described in connection with the specified embodiments, it should not be construed as being in any way limited to the presented examples. In particular, the embodiments of Figs 4-8 may be combined in any suitable way within the scope of the invention. The invention can be implemented by any suitable means; and the scope of the present invention is to be interpreted in the light of the accompanying claim set. Any reference signs in the claims should not be construed as limiting the scope.

## Claims

1. An ultrasonic flow meter (1) arranged to measure a flow rate of a fluid, the meter comprises:
- a through-going flow channel (3) defining a passage of the fluid, the flow channel comprises a mount section (7) for mounting flow meter components;
- two or more piezoelectric transducers (4) arranged in the mount section;
- control circuit (5) arranged for operating the two or more piezoelectric transducers and to generate a signal or value indicative of the flow rate of the fluid;
**characterized in that** each transducer is adhered to the outer surface of the flow channel in the mount section, and wherein the control circuit is electrically connected to the piezoelectric transducers by a flexible connector (6) being connected to at least one of the transducer and the control circuit by means of a contact pressure arising from the mount of the control circuit onto the flow channel.

2. Flow meter according to claim 1, wherein the piezoelectric transducer is a monolithic piezoelectric transducer of a ceramic material.

3. Flow meter according to any of the preceding claims, wherein at least the mount section is made of a polymer material.

4. Flow meter according to any of the preceding claims, wherein each transducer is adhered to the outer surface of the flow channel by use of an adhesive layer (40).

5. Flow meter according to any of the preceding claims, wherein the flexible conductor is a block of conductive polymer (6).

6. Flow meter according to any of the preceding claims, wherein the flexible block of conductive polymer comprises separate conductive areas (62, 63), separated by a non-conductive area.

7. Flow meter according to any of the preceding claims, wherein the flexible conductor is a metallic spring (53-55, 72, 81, 82).

8. Flow meter according to any of the preceding claims, wherein the flexible conductor is fixed to the control circuit and connected to the transducer by means of the contact pressure arising from the mount of the control circuit on the flow channel.

9. Flow meter according to any of the preceding claims, wherein the flexible conductor is fixed to the transducer or an electrode of the transducer and connected to the control circuit by means of the contact pressure arising from the mount of the control circuit on the flow channel.

10. Method of fabricating an ultrasonic flow meter, the method comprises:
- providing a through-going flow channel defining a passage of the fluid, the flow channel comprises a mount section for mounting flow meter components;
- mounting two or more piezoelectric transducers in the mount section;
- mounting a control circuit arranged for operating the two or more piezoelectric transducers and to generate a signal or value indicative of the flow rate of the fluid;
**characterized in that** each of the two or more transducer are mounted by adhering the transducers to the outer surface of the flow channel in the mount section, and wherein prior to mounting the control circuit, connect flexible connectors to at least one of the transducer and the control circuit, so that upon mounting of the control circuit onto the flow channel, the control circuit is electrically connected to the piezoelectric transducers by the flexible connector by means of a contact pressure arising from the mount of the control circuit onto the flow channel.
